(19)

Europäisches
Patentamt

European
Patent Office

Office européen
des brevets

(11)     **EP 3 056 814 A1**

(12)                                        **EUROPEAN PATENT APPLICATION**

(43) Date of publication:
     **17.08.2016   Bulletin 2016/33**

(51) Int Cl.:
     **F23N 1/00** *(2006.01)*     **F02C 7/228** *(2006.01)*
     **F02C 9/34** *(2006.01)*     **F23R 3/34** *(2006.01)*

(21) Application number: **15155065.4**

(22) Date of filing: **13.02.2015**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**

(71) Applicant: **General Electric Technology GmbH
     5400 Baden (CH)**

(72) Inventors:
     • **Ferreira-Providakis, Theodoros
       5430 Wettingen (CH)**

     • **Smith, Richard
       5408 Ennetbaden (CH)**
     • **Meeuwissen, Thiemo
       Ennetbaden (CH)**
     • **Marchione, Teresa
       5408 Ennetbaden (CH)**

(74) Representative: **Bernotti, Andrea et al
     Studio Torta S.p.A.
     Via Viotti, 9
     10121 Torino (IT)**

(54)    **METHOD OF CONTROLLING THE FUEL DISTRIBUTION AMONG DIFFERENT STAGES OF A
        GAS TURBINE COMBUSTION CHAMBER**

(57)    A method of controlling the fuel distribution among different stages of a gas turbine combustion chamber (3) is disclosed. The combustion chamber (3) has at least two stages for fuel supply, and the fuel distribution between the stages is determined according to the load or one or more parameters indicative of the load. In reply to a fast load change being faster than a load change during a regular transient operation, the fuel distribution is determined according to an adjusted load or one or more parameters indicative of an adjusted load.

Fig. 8

EP 3 056 814 A1

**Description**

TECHNICAL FIELD

The present invention relates to a method of controlling the fuel distribution among different stages of a gas turbine combustion chamber.

BACKGROUND

Gas turbines are known to comprise a compressor for compressing an oxidizer such as air, a combustion chamber where a fuel is combusted with the compressed air generating hot gas, and a turbine where the hot gas is expanded, gathering mechanical work.

Combustion chambers can have staged fuel supply. A combustion chamber with staged fuel supply has a number of fuel nozzles that can be independently supplied with fuel, in order to adjust the fuel distribution within the combustion chamber by adjusting the fuel injected through the nozzles of different stages.

During operation fuel distribution can be adjusted according to the load or one or more parameters indicative of the load, in order to maintain the gas turbine operation in optimal or acceptable operating conditions over a large operating load window (for example the operating load window can vary from 40% to 100% of the nominal load).

During transient operation (regular transient operation for increasing/reducing the power of the gas turbine in response to a changed request of the grid) the load of the gas turbine or parameters indicative thereof are measured and the fuel distribution is determined accordingly.

The measuring of the load or parameters indicative of the load and the calculation or determination in other way (for example by look up tables) of the load requires some time, such that the fuel distribution corresponding to a measured load is implemented with a delay.

The delay is not troubling for the regular transient operation, because the regular transient operation is quite slow (in the order of tens of seconds or minutes), such that the load or parameters indicative of the load do not change substantially during the delay and the fuel distribution even implemented with a delay is substantially correct.

In some particular conditions, the transient operation can be abnormally fast. For example during protective load shedding (when the gas turbine is de-loaded because of a problem) or frequency response (when the gas turbine load has to be changed in response to a grid frequency change) the gas turbine is loaded or de-loaded in seconds, with a fast gradient that can be up to 10 times higher than during regular transient. For example during a regular transient operation the gas turbine can typically undergo a load change of 2 MW/min while during an abnormal transient operation the load change can be 4 MW/sec.

During these abnormal transient operations, the delay between the measurement of the load or parameters indicative of the load and the implementation of the fuel distribution can cause implementation of a fuel distribution not corresponding to the current load, with operation close to the lean blow off and risks of flame extension and/or pulsation.

SUMMARY

An aspect of the invention includes providing a method of controlling the fuel distribution among different stages of a gas turbine combustion chamber that is able to improve the gas turbine operation during abnormal transient operation.

These and further aspects are attained by providing a method in accordance with the accompanying claims.

BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:

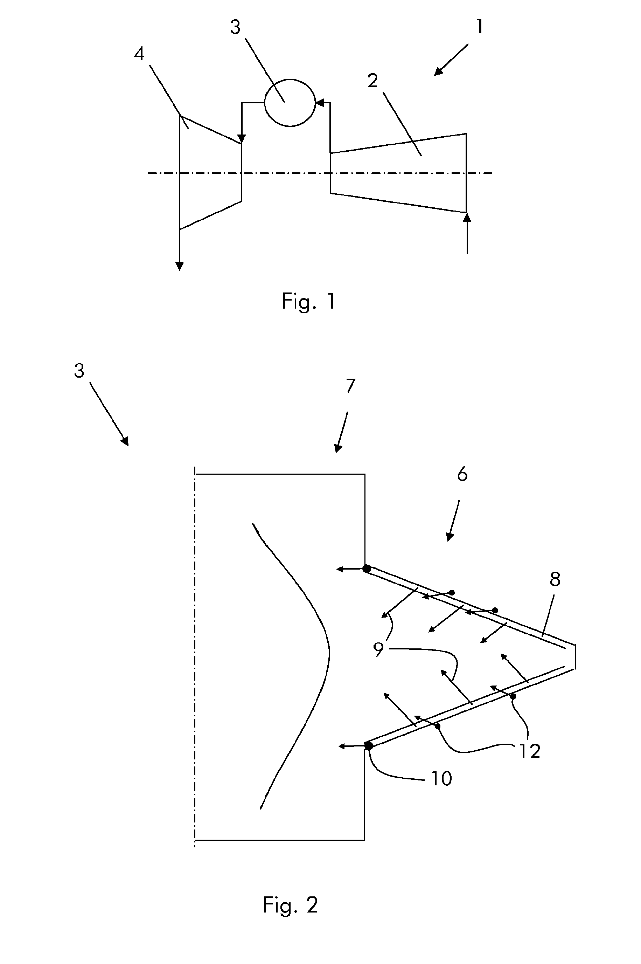

   Figures 1 and 2 show a gas turbine and a combustion chamber thereof;
   Figures 3 and 4 show look up tables for implementing fuel distribution;
   Figures 5 through 8 show different relationships between the Front Stage Ratio and parameters indicative of the load.

DETAILED DESCRIPTION OF EXEMPLARY EMBODIMENTS

With reference to the figures, these show a gas turbine 1 with a compressor 2 for compressing an oxidizer, such as air, a combustion chamber 3 for combusting a fuel with the compressed oxidizer generating hot gas, and a turbine 4 for expanding the hot gas and gather mechanical power.

The combustion chamber can be of any type, in the following reference to a combustion chamber arranged for implementing a pre-mixed combustion is made.

The combustion chamber 3 has one or more burners 6 connected to a combustor 7. The burners 6 have a substantially conical shape with slots 8 axially extending over the conical surface, for oxidizer 9 supply into the burners 6.

The burners 6 are also provided with nozzles for fuel supply.

First nozzles 10 define a first fuel supply stage and are provided at the terminal part of the burner 6, in order to supply fuel into the combustor 7 for combustion; fuel supplied via the first stage undergoes diffusion combustion.

Second nozzles 12 define a second fuel supply stage and are provided at the slots 8 (for example adjacent to the slots 8 or within the nozzles 8), in order to supply fuel into the burner for mixing the fuel with the oxidizer generating a fuel/oxidizer mixture that then passes into the combustor 7 for combustion; fuel supplied via the second stage undergoes pre-mixed combustion.

During operation the total amount of fuel defines the load and the fuel distribution between the first and second stages is adjusted in order to guarantee a correct operation. Typically the fuel distribution is defined according to the load or one or more parameters indicative of the load; for example parameters indicative of the load can be the VIGV position (i.e. the opening of the inlet guide vanes upstream of the compressor) and/or the TAT (i.e. the hot gas temperature upstream of the turbine). Other parameters are anyhow possible.

The fuel distribution between the stages is defined on the basis of the Front Stage Ratio, defined by

$$FSR = m_1 / (m_1 + m_2)$$

wherein

FSR is the front stage ratio, $m_1$ is the fuel mass flow through the first stage, $m_2$ is the fuel mass flow through the second stage.

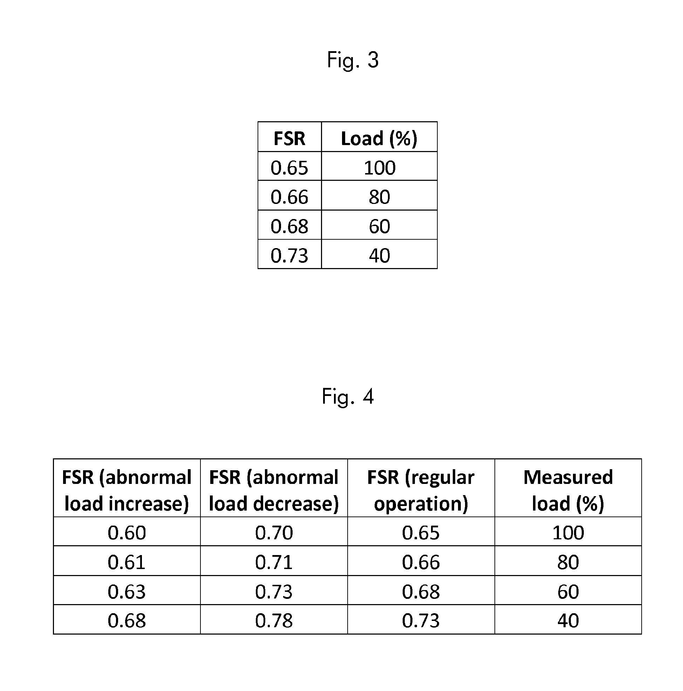

Figure 3 shows an example of a look up table that can be used to implement the fuel distribution according to the load.

The look up table can contain the FSR corresponding to different loads, such that during regular operation the load is measured and on the basis of the measured load the FSR is adjusted according to the look up table.

According to the method, in reply to a fast load change being faster than a load change during a regular transient operation, the fuel distribution is determined according to an adjusted load or one or more parameters indicative of an adjusted load.

The method can be implemented both when the fast load change is a load reduction or a load increase.

When the fast load change is a load reduction the adjusted load is a lower load than the measured load; when the fast load change is a load increase the adjusted load is a higher load than the measured load.

For example figure 4 shows a look up table that could be used to implement the method of the invention.

During normal operation (i.e. at steady state or with slow transient operation) the look up table provides the relationship between the load (or parameter indicative of the load) and the SFR (column "FSR (regular operation)"); during abnormal operation (i.e. with fast increase or reduction of the load) the table provides the SFR for load decrease or load increase. In particular:

- The column FSR (abnormal load decrease) provides for each measured load, FSR values corresponding to a lower load (real or theoretical value); for this reason the FSR values in this column are higher than in the column FSR (regular operation);
- the column FSR (abnormal load increase) provides for each measured load, FSR values corresponding to a higher load (real or theoretical); for this reasons the FSR values in this column are lower than in the column FSR (regular operation).

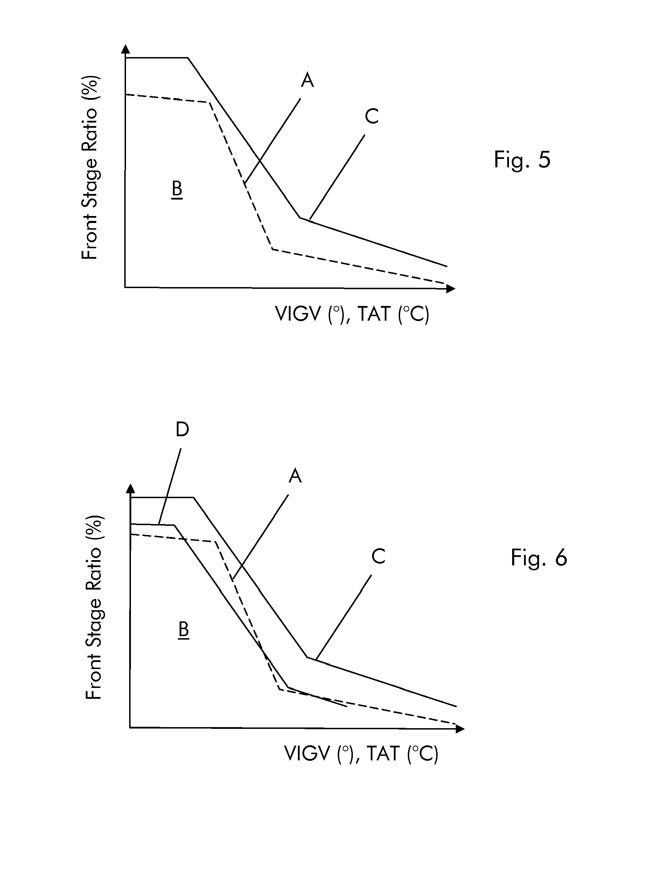

In the following a specific example is described with reference to figures 5 through 7.

Figure 5 shows the relationship between the SFR and VIGV and TAT (parameters indicative of the load); in particular:

- curve A delimits the zone B wherein operation is not safe (for example because operation becomes close to lean blow off), therefore the gas turbine operation has to be outside of this zone B;
- curve C indicates the relationship between the FSR and the parameters indicative of the load during regular operation (i.e. steady state operation and slow transient operation).

Figure 6 shows curve D that indicates the actual FSR that is implemented in the gas turbine in case of fast load reduction, when FSR is adjusted on the basis of curve C, because of the delay between load measurement and adjustment implementation. Figure 6 shows that because of the delay the FSR can fall within the zone B.

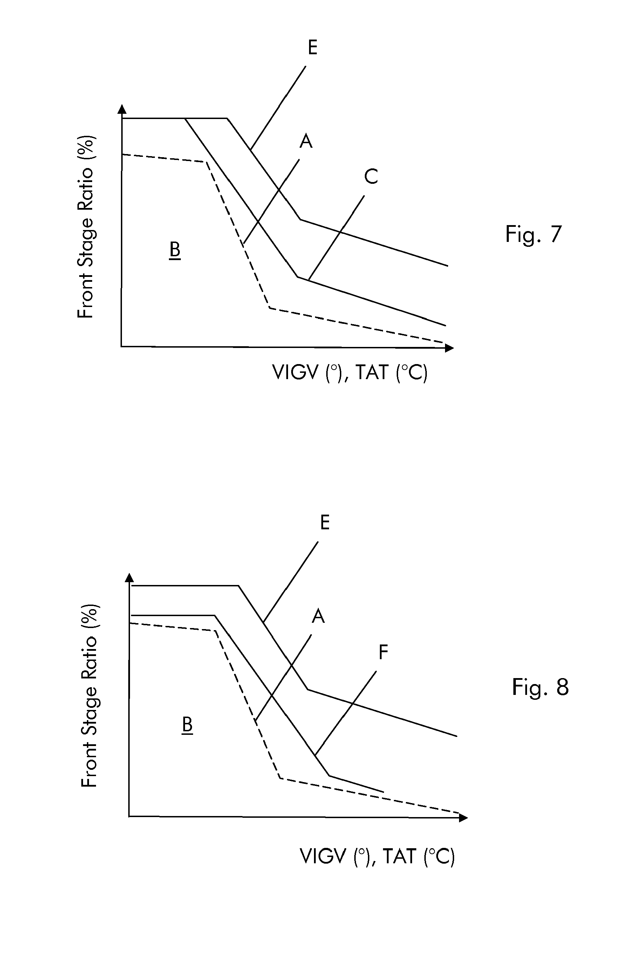

Figure 7 shows the curve E that indicates the relationship between the FSR and the parameters indicative of the load, to be used in case of abnormal transient, for example in case of fast load reduction; as it is shown the FSR is higher for given loads than in case of regular operation.

Figure 8 shows the curve F that indicates the actual FSR that is implemented in the gas turbine, when adjusting the FSR on the basis of the curve E, in case of fast load reduction because of the delay between the load measurement and adjustment implementation. Figure 8 shows that notwithstanding the delay, the current FSR never falls within the zone B.

Naturally the features described may be independently provided from one another.

In practice the materials used and the dimensions can be chosen at will according to requirements and to the state of the art.

REFERENCE NUMBERS

**[0035]**

1 gas turbine
2 compressor
3 combustion chamber
4 turbine
6 burner
7 combustor
8 slot
9 oxidizer
10 first nozzle
12 second nozzle
A curve delimiting the not-safe operation zone
B not safe operation zone
C relationship between FSR and parameters indicative of the load during regular operation
D curve indicative of the actual FSR implemented for fast load reduction during abnormal transient
E relationship between FSR and parameters indicative of the load to be used during fast load reduction
F curve indicative of the actual FSR implemented for fast load reduction during abnormal transient using the curve E as the basis for the adjustment

**Claims**

1. A method of controlling the fuel distribution among different stages of a gas turbine combustion chamber (3), wherein
   the combustion chamber (3) has at least two stages for fuel supply, and
   the fuel distribution between the stages is determined according to the load or one or more parameters indicative of the load,
   **characterized in that**
   in reply to a fast load change being faster than a load change during a regular transient operation, the fuel distribution is determined according to an adjusted load or one or more parameters indicative of an adjusted load.

2. The method of claim 1, **characterized in that**
   when the fast load change is a load reduction the adjusted load is a lower load than the measured load, and
   when the fast load change is a load increase the adjusted load is a higher load than the measured load.

3. The method of claim 1, **characterized in that** the combustion chamber has two stages.

4. The method of claim 3, **characterized in that**
   a first stage supplies fuel directly into a combustion chamber for diffusion combustion, and
   a second stage supplies fuel into a burner for mixing the fuel with air generating a mixture that is then supplied into the combustion chamber for premixed combustion.

5. The method of claim 4, **characterized in that** the fuel distribution between the two stages in defined by a Front Stage Ratio, defined by

$$FSR = m_1 / (m_1 + m_2)$$

wherein
FSR is the front stage ratio, $m_1$ is the fuel mass flow through the first stage, $m_2$ is the fuel mass flow through the second stage.

Fig. 1

Fig. 2

Fig. 3

| FSR | Load (%) |
|------|----------|
| 0.65 | 100 |
| 0.66 | 80 |
| 0.68 | 60 |
| 0.73 | 40 |

Fig. 4

| FSR (abnormal load increase) | FSR (abnormal load decrease) | FSR (regular operation) | Measured load (%) |
|------|------|------|------|
| 0.60 | 0.70 | 0.65 | 100 |
| 0.61 | 0.71 | 0.66 | 80 |
| 0.63 | 0.73 | 0.68 | 60 |
| 0.68 | 0.78 | 0.73 | 40 |

Fig. 5

Fig. 6

Fig. 7

Fig. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/016636 A1 (JOHN JUSTIN V [US] ET AL) 19 January 2012 (2012-01-19) * page 1, paragraph 3 - page 4, paragraph 34 * * figures 1-4 * | 1-5 | INV. F23N1/00 F02C7/228 F02C9/34 F23R3/34 |
| A | GB 2 450 515 A (ROLLS ROYCE PLC [GB]) 31 December 2008 (2008-12-31) * page 6, line 18 - page 15, line 21 * * figures 1, 2 * | 1-5 | |
| A | US 2015/040573 A1 (FERREIRA-PROVIDAKIS THEODOROS [CH] ET AL) 12 February 2015 (2015-02-12) * page 1, paragraph 3 - page 4, paragraph 86 * * figures 1-7 * | 1-5 | |
| A | US 2010/168980 A1 (FULLER JASON D [US] ET AL) 1 July 2010 (2010-07-01) * page 2, paragraph 19 - page 4, paragraph 38 * * figures 1-3 * | 1-5 | TECHNICAL FIELDS SEARCHED (IPC) F23N F02C F23R |
| A | US 2014/200721 A1 (RIZKALLA HANY [US] ET AL) 17 July 2014 (2014-07-17) * the whole document * | 1-5 | |

The present search report has been drawn up for all claims

| Place of search | Date of completion of the search | Examiner |
|---|---|---|
| Munich | 21 July 2015 | Rudolf, Andreas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 15 15 5065

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2015

| Patent document cited in search report | | Publication date | Patent family member(s) | | Publication date |
|---|---|---|---|---|---|
| US 2012016636 | A1 | 19-01-2012 | CN | 102330608 A | 25-01-2012 |
| | | | EP | 2407642 A2 | 18-01-2012 |
| | | | JP | 5404699 B2 | 05-02-2014 |
| | | | JP | 2012021527 A | 02-02-2012 |
| | | | US | 2012016636 A1 | 19-01-2012 |
| GB 2450515 | A | 31-12-2008 | NONE | | |
| US 2015040573 | A1 | 12-02-2015 | CN | 104373219 A | 25-02-2015 |
| | | | EP | 2835516 A1 | 11-02-2015 |
| | | | EP | 2843211 A1 | 04-03-2015 |
| | | | JP | 2015034548 A | 19-02-2015 |
| | | | KR | 20150018451 A | 23-02-2015 |
| | | | US | 2015040573 A1 | 12-02-2015 |
| US 2010168980 | A1 | 01-07-2010 | EP | 2204563 A2 | 07-07-2010 |
| | | | JP | 5336346 B2 | 06-11-2013 |
| | | | JP | 2010156328 A | 15-07-2010 |
| | | | US | 2010168980 A1 | 01-07-2010 |
| US 2014200721 | A1 | 17-07-2014 | NONE | | |

EPO FORM P0459

For more details about this annex : see Official Journal of the European Patent Office, No. 12/82